## Europäisches Patentamt

## European Patent Office

### Office européen des brevets

(11) Veröffentlichungsnummer: **0 301 212**
**A2**

(12) **EUROPÄISCHE PATENTANMELDUNG**

(21) Anmeldenummer: **88109335.5**

(22) Anmeldetag: **11.06.88**

(51) Int. Cl.4: **F24F 6/12**

(30) Priorität: **29.07.87 CH 2895/87**

(43) Veröffentlichungstag der Anmeldung:
**01.02.89 Patentblatt 89/05**

(84) Benannte Vertragsstaaten:
**AT CH DE FR GB IT LI NL SE**

(71) Anmelder: **E. Schönmann & Co. AG**
**Glattalstrasse 63**
**CH-8052 Zürich(CH)**

(72) Erfinder: **Schönmann, Wilfred E.**
**Glattalstrasse 63**
**CH-8052 Zürich(CH)**

(74) Vertreter: **Petschner, Goetz**
**Patentanwaltsbüro G. Petschner**
**Seidengasse 18**
**CH-8001 Zürich(CH)**

(54) **Luftbefeuchtungseinrichtung.**

(57) Die Luftbefeuchtungseinrichtung umfasst einen Strömungskanal (1'), in dem eine gegen die Strömungsrichtung der zu befeuchtenden Luft wirksame Wasser-Strahldüse (2) angeordnet ist. Vor deren Düsenöffnung (12) befindet sich eine, der radialen Zerstäubung des aus der Düsenöffnung (12) austretenden Wasserstrahles wenigstens angenähert über den ganzen Kanalquerschnitt dienende Prallfläche (11).

Dadurch lässt sich eine feinste Zerstäubung des Wassers quer zur Strömungsrichtung der zu befeuchtenden Luft erzielen, die so von feinsten Tröpfchen durchsetzt wird, die unter der Wirkung des Energieinhaltes der den Strömungskanal durchströmenden Luft verdampfen, womit eine adiabatische Luftbefeuchtung erreicht wird.

*Fig.1*

## Luftbefeuchtungseinrichtung

Die vorliegende Erfindung betrifft eine Luftbefeuchtungseinrichtung, bei der in einen angesaugten und kanalisierten Luftstrom Wasser in zerstäubter Form eintritt, das unter der Wirkung des Energieinhaltes der Luft verdampft und von dieser aufgenommen wird.

Solche adiabatisch arbeitenden Luftbefeuchter haben den Vorteil der Erhöhung der relativen Luftfeuchtigkeit, ohne hierfür mittels Fremdenergie Dampf erzeugen und zuführen zu müssen.

Entsprechende Anordnungen sind beispielsweise die sogenannten Luftwäscher oder Kontaktluftbefeuchter, bei denen grosse Mengen Wasser durch Rohrsysteme geführt werden und aus Düsen austreten.

Bei solchen Anordnungen bilden aber Verkalkungen und Algenbildungen schwerwiegende Probleme, die eine Wasserbehandlung zur Entspannung erfordern, was aber wiederum eine Abwasserbelastung zur Folge hat. Zudem sind zur Vermeidung von Kon zentrationen im Umlaufwasser relativ grosse Abschlämm-Mengen notwendig.

Ferner sind sogenannte Verdunstungsluftfeuchter bekannt, welche vorwiegend mit Kunststoffmatten oder filterähnlichen Materialien arbeiten.

Hier verlangen Kalkablagerungen und Veralgung ein ständiges Auswechseln der Materialien, die zudem als Wegwerfprodukte unerwünscht sind.

Bei sogenannten Schleuderscheibenbefeuchtern wird Wasser in kleinste Tröpfchen zerstäubt, die vom Luftvolumen aufgenommen werden.

Hier sind aber zusätzliche Antriebselemente erforderlich und zudem ist in den meisten Fällen eine Wasseraufbereitung notwendig. Weiter ist die ungenutzt abfliessende Wassermenge relativ gross.

Ferner sind sogenannte Druckluftzerstäuberdüsen bekannt.

Diese sind aber von einem zusätzlichen Druckluftsystem abhängig.

Bekannte sogenannte Ultraschallbefeuchtungsgeräte verlangen eine Ultraschallquelle sowie hier sehr aufwendige Wasseraufbereitungsanlagen.

Somit können die Einrichtungen zur adiabatischen Luftbefeuchtung des Standes der Technik den heutigen Anforderungen bezüglich kompakter, einfacher und im wesentlichen wartungsfreier Konzeption nicht genügen.

Es ist deshalb Aufgabe der vorliegenden Erfindung, hier Abhilfe zu schaffen und eine Luftbefeuchtungseinrichtung der vorgenannten Art zu konzipieren, die den vorerwähnten Anforderungen genügt.

Dies wird erfindungsgemäss dadurch erreicht, dass in einem Strömungskanal im Strömungsweg der zu befeuchtenden Luft mindestens eine, gegen die Strömungsrichtung der Luft wirksame Wasser-Strahldüse angeordnet ist, vor deren Düsenöffnung sich eine, der radialen Zerstäubung des aus der Düsenöffnung austretenden Wasserstrahles wenigstens angenähert über den ganzen Kanalquerschnitt dienende Prallfläche befindet.

Durch diese erfindungsgemässen Massnahmen lässt sich nunmehr bei einem entsprechend hohen relativen Wasserdruck und einer relativ kleinen Düsenöffnung eine feinste Zerstäubung des Wassers quer zur Strömungsrichtung der zu befeuchtenden Luft erzielen, die so von feinsten Tröpfchen durchsetzt wird, die unter der Wirkung des Energieinhaltes der den Strömungskanal durchströmenden Luft wenigstens teilweise verdampfen.

Um zu verhindern, dass tröpfchenförmige Wasser-Restinhalte mit der Luft in die Umgebung getragen werden, ist bei einer bevorzugten Ausgestaltung die Anordnung so, dass der, die Wasser-Strahldüse umgebenden Zerstäubungszone ein, den Strömungskanal im Querschnitt vollständig durchsetzendes Abscheideelement nachgeschaltet ist, wobei das Abscheideelement aus einem Material mit schwammartiger Struktur, etwa Keramik bestehen kann.

Das Labyrinth von Kanälen eines solchen Materials scheidet die tröpfchenförmigen Wasser-Restinhalte der durchströmenden Luft ab, ohne die Luftströmung wesentlich zu behindern. Zudem bewirkt die grosse, durch die Abscheidung benetzte innere Oberfläche der Struktur ein weiteres Verdunsten der WasserRestinhalte, die wieder von der strömenden Luft aufgenommen werden.

Um ferner wenigstens im Bereich der Zerstäubungszone eine an allen Stellen des Kanalquerschnittes eine gleichmässige Luftströmung zu erzielen, besteht eine weitere vorteilhafte Ausgestaltung der erfindungsgemässen Luftbefeuchtungseinrichtung darin, dass der, die Wasser-Strahldüse umgebenden Zerstäubungszone ein, den Strömungskanal im Querschnitt vollstän dig durchsetzender Strömungsgleichrichter vorgeschaltet ist, wobei dann der Strömungsgleichrichter eine Vielzahl parallele, aus mehreren Wellfolien mit zwischenliegenden Trennlagen, alle aus Aluminium, gebildete Kanäle umfasst. Letzteres ergibt einen einfachen, leichten, absolut wartungsfreien und strömungsgünstigen Aufbau.

Um weiter im Bereich der Zerstäubungszone der Gefahr einer Kondensation oder Abscheidung an der Kanalwandung zu begegnen, ist es ferner zweckmässig, wenn die, die Wasser-Strahldüse umgebende Zerstäubungszone von einem, sich in Strömungsrichtung erweiternden, luftdurchlässigen Abscheide-Element umfasst ist, das mindestens von unten her von einem Teil der im Strömungskanal herrschenden Luftströmung durchsetzt wird.

Diese Luftströmung verhindert wirksam, dass die von feinsten Tröpfchen durchsetzte Luft in Kontakt mit der Kanalwandung kommen kann, was sonst zur Kondensation oder Abscheidung führen könnte. Bei einer solchen Ausführungsform kann u.U. auf eine Auffangwanne für abgeschiedenes oder ausfallendes Restwasser verzichtet werden.

Da die Düsenöffnung relativ klein ist, sind Massnahmen zu treffen, die ein Verstopfen verhindern.

Hierfür ist es von Vorteil, wenn die Wasser-Strahldüse eine membrangesteuerte Nadel umfasst, welche bei fehlendem Wasserdruck unter der Wirkung einer, auf die Membrane wirkende Schliessfeder die Düsenöffnung durchdringt und welche sich bei vorhandenem, auf die Membrane wirkenden Wasserdruck ausserhalb der Düsenöffnung befindet.

Da Einrichtungen dieser Art in der Regel intermittierend arbeiten, erfolgt ein Durchstossen der Düsenöffnung relativ oft, was eine Verstopfung wirksam ausschliesst.

Eine beispielsweise Ausführungsform des Erfindungsgegenstandes ist nachfolgend anhand der Zeichnung näher erläutert. Es zeigen:

Fig. 1 in einer schematischen Querschnittsdarstellung eine erfindungsgemässe Luftbefeuchtungseinrichtung;

Fig. 2 in einer Frontansicht, in einem grösseren Massstab einen Ausschnitt eines Strömungsgleichrichters der Anordnung gemäss Fig. 1 und

Fig. 3 in schematischer, vergrösserter Darstellung die Wasser-Strahldüse der Anordnung gemäss Fig. 1.

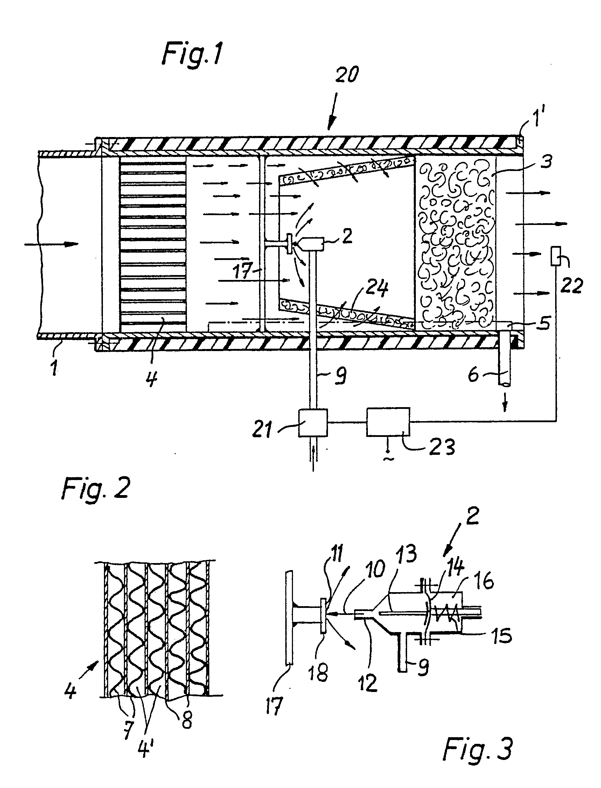

Die erfindungsgemässe Luftbefeuchtungseinrichtung gemäss Fig. 1 umfasst einen zweckmässig isolierten Strömungskanal 1', welcher ein Abschnitt eines Luftverteilerkanals 1 oder Teil eines mit einem Ventilator ausgerüsteten Gerätes (nicht näher gezeigt) sein kann.

Im Strömungskanal 1' strömt hier beispielsweise die zu befeuchtende Luft in Richtung der Strömungspfeile von links nach rechts in der Darstellung.

Der Kanal 1' ist in der Regel von kastenförmigem oder rundem Querschnitt.

Vorzugsweise mittig im Strömungsweg der Luft ist hier eine, gegen die Strömungsrichtung der Luft wirksame Wasser-Strahldüse 2 angeordnet, vor deren Düsenöffnung 12 sich eine, der radialen Zerstäubung des aus der Düsenöffnung 12 austretenden Wasserstrahles 10 wenigstens angenähert über den ganzen Kanalquerschnitt dienende Prallfläche 11 befindet, wie das die Fig. 1 und 3 verdeutlichen. Die Prallfläche 11 kann dabei von der Stirnseite eines, über eine Strebe 17 an der Kanalwand abgestützten Flansches 18 gebildet sein.

Die Wasser-Strahldüse 2 ist über eine Zuleitung 9 und über ein Oeffnungsventil 21 an das vorhandene Wassernetz anschliessbar. Das betreffende Oeffnungsventil 21 ist über einen Steuerteil 23 ansteuerbar, etwa in Abhängigkeit von Zeitgliedern (nicht gezeigt) und/oder über, die Luftfeuchtigkeit der Umgebungsluft messenden Hygrometer 22.

Wie Fig. 3 mehr im Einzelnen zeigt, umfasst die Wasser-Strahldüse 2 ein Gehäuse 16, in welchem eine Membrane 14 abgestützt ist, die düsenseitig und bei geöffnetem Oeffnungsventil 21 unter der Wirkung des Wasserdruckes und auf ihrer anderen Seite unter der Wirkung einer Rückstell- resp. Schliessfeder 15 steht.

Mit der Membrane 14 ist eine Nadel 13 axial verschiebbar, welche bei fehlendem Wasserdruck unter der Wirkung der Schliessfeder 15 die Düsenöffnung 12 durchdringt und welche sich bei vorhandenem, auf die Membrane 14 wirkenden Wasserdruck ausserhalb der Düsenöffnung 12 befindet.

Wie Fig. 1 weiter im Einzelnen zeigt, ist der, die WasserStrahldüse 2 umgebenden Zerstäubungszone 20 ein, den Strömungskanal 1' im Querschnitt vollständig durchsetzender Strömungsgleichrichter 4 vorgeschaltet.

Dieser Strömungsgleichrichter 4 kann gemäss Fig. 2 eine Vielzahl parallele, aus mehreren Wellfolien 7 und zwischenliegenden Trennlagen 8, welche vorzugsweise alle aus Aluminium bestehen, gebildete Kanäle 4' umfassen.

Weiter zeigt Fig. 1, dass der, die Wasser-Strahldüse 2 umgebenden Zerstäubungszone 20 ein, den Strömungskanal 1' im Querschnitt vollständig durchsetzendes Abscheideelement 3 nachgeschaltet ist.

Dieses Abscheideelement 3 besteht vorzugsweise aus einem Material mit schwammartiger Struktur, etwa Keramik. Ein solches Element kann ohne weiteres organische und anorganische Bestandteile aus Luft und Wasser aufnehmen und nachfolgend im Austauschverfahren regeneriert werden, etwa durch Erhitzen zum Beseitigen der organischen Bestandteile resp. durch Absäuern von Kalk u.s.f., ohne dass das Element Schaden nimmt.

Im Bodenbereich dieses Abscheideelementes 3 sowie im Bereich der Zerstäubungszone 20 ist hier ferner eine Auffangwanne 5 mit einem Ablauf 6 zur Aufnahme und Wegführung von Ueberschusswasser vorgesehen.

Weiter zeigt Fig. 1, dass die, die Wasser-Strahlungsdüse 2 umgebende Zerstäubungszone 20 von einem, sich in Strömungsrichtung erweiternden, luftdurchlässigen Abscheide-Element 24 umfasst wird, das mindestens von unten her von einem Teil der im Strömungskanal 1' herrschenden Luftströmung durchsetzt wird.

Eine solche erfindungsgemässe Luftbefeuchtungseinrichtung kann nunmehr allen eingangs erwähnten Anforderungen genügen.

Die im Luftverteilerkanal 1 herrschende Luftströmung gelangt zunächst zum und durch den Strömungsgleichrichter 4 der Luftbefeuchtungseinrichtung, womit eine von Turbulenzen freie Luftströmung in die Zerstäubungszone 20 eintritt und dort die von Wasser-Strahldüse 2 und Prallfläche 11 radial zerstäubten, feinsten Wassertröpfchen mitreisst, wie dies in Fig. 1 durch die Strömungspfeile angedeutet ist. Hierbei wird bereits ein grosser Teil des zugeführten Wassers unter der Wirkung des Energieinhaltes der den Strömungskanal 1' durchströmenden Luft verdampft. Das nachgeschaltete Abscheideelement 3 verhindert dann, dass tröpfchenförmige WasserRestinhalte mit der Luft in die Umgebung getragen werden. Wasser-Restinhalte, die an den Kanalwänden abgeschieden werden resp. dort kondensieren, werden von der Wanne 5 aufgefangen.

Letzteres kann zudem vermieden werden, wenn die Zerstäubungszone 20 vom vorbeschriebenen Abscheide-Element 24 umgeben wird, wie vorstehend ausführlich erläutert ist.

Da eine solche Luftbefeuchtungseinrichtung in der Regel intermittierend arbeitet, wird nicht nur, wie vorbeschrieben, die Düsenöffnung 12 ständig gereinigt, sondern zudem die im Abscheideelement 3 noch vorhandene Restfeuchte durch die, bei stillgesetzter Düse 2 relativ trockene Luftströmung verdampft und ausgetragen.

Somit wird eine adiabatische Luftbefeuchtung mit Mitteln erreicht, welche einfach, funktionssicher und wartungsarm sind, womit eine solche erfindungsgemässe Luftbefeuchtungseinrichtung alle heutigen Anforderungen erfüllt.

## Ansprüche

1. Luftbefeuchtungseinrichtung, bei der in einen angesaugten und kanalisierten Luftstrom Wasser in zerstäubter Form eintritt, das unter der Wirkung des Energieinhaltes der Luft verdampft und von dieser aufgenommen wird, dadurch gekennzeichnet, dass in einem Strömungskanal (1') im Strömungsweg der zu befeuchtenden Luft mindestens eine, gegen die Strömungsrichtung der Luft wirksame Wasser-Strahldüse (2) angeordnet ist, vor deren Düsenöffnung (12) sich eine, der radialen Zerstäubung des aus der Düsenöffnung (12) austretenden Wasserstrahles wenigstens angenähert über den ganzen Kanalquerschnitt dienende Prallfläche (11) befindet.

2. Luftbefeuchtungseinrichtung nach Anspruch 1, dadurch gekennzeichnet, dass der, die Wasser-Strahldüse (2) umgebenden Zerstäubungszone (20) ein, den Strömungskanal (1') im Querschnitt vollständig durchsetzendes Abscheideelement (3) nachgeschaltet ist.

3. Luftbefeuchtungseinrichtung nach Anspruch 2, dadurch gekennzeichnet, dass das Abscheideelement (3) aus einem Material mit schwammartiger Struktur, vorzugsweise Keramik besteht.

4. Luftbefeuchtungseinrichtung nach Anspruch 1, dadurch gekennzeichnet, dass der, die Wasser-Strahldüse (2) umgebenden Zerstäubungszone (20) ein, den Strömungskanal (1') im Querschnitt vollständig durchsetzender Strömungsgleichrichter (4) vorgeschaltet ist.

5. Luftbefeuchtungseinrichtung nach Anspruch 4, dadurch gekennzeichnet, dass der Strömungsgleichrichter (4) eine Vielzahl parallele, aus mehreren Wellfolien (7) mit zwischenliegenden Trennlagen (8), alle aus Aluminium, gebildete Kanäle (4') umfasst.

6. Luftbefeuchtungseinrichtung nach Anspruch 1, dadurch gekennzeichnet, dass die, die Wasser-Strahldüse (2) umgebende Zerstäubungszone (20) von einem, sich in Strömungsrichtung erweiternden, luftdurchlässigen Abscheide-Element (24) umfasst ist, das mindestens von unten her von einem Teil der im Strömungskanal (1') herrschenden Luftströmung durchsetzt wird.

7. Luftbefeuchtungseinrichtung nach Anspruch 1, dadurch gekennzeichnet, dass die Wasser-Strahldüse (2) eine membrangesteuerte Nadel (13) umfasst, welche bei fehlendem Wasserdruck unter der Wirkung einer, auf die Membrane (14) wirkende Schliessfeder (15) die Düsenöffnung (12) durchdringt und welche sich bei vorhandenem, auf die Membrane (14) wirkenden Wasserdruck ausserhalb der Düsenöffnung (12) befindet.

*Fig.1*

*Fig. 2*

*Fig. 3*